# EUROPEAN PATENT SPECIFICATION

(11) **EP 4 066 621 B1**
(45) Date of publication and mention of the grant of the patent: **14.10.2026**
(21) Application number: 21166409.9
(22) Date of filing: 31.03.2021
(51) Int. Cl.: A01D 43/073, A01D 43/08, A01D 41/02

(54) **SELF-PROPELLED FORAGE HARVESTER PROVIDED WITH MEANS FOR MITIGATING SPOUT BLOCKAGE**
SELBSTFAHRENDER MÄHLADER MIT MITTELN ZUR VERMINDERUNG VON STUTZENVERSTOPFUNGEN
RÉCOLTEUSE-HACHEUSE DE FOURRAGE AUTOPROPULSÉE DOTÉE DE MOYENS D'ATTÉNUATION DE BLOCAGE DE BEC VERSEUR

(43) Date of publication of application: 05.10.2022
(73) Proprietor: CNH Industrial Belgium N.V., 8210 Zedelgem (BE)
(72) Inventor: Debbaut, Thomas, 9932 Ronsele (BE); Mortier, Geert P., 9000 Gent (BE); Vanden Broucke, Jan Pieter, 8890 Moorslede (BE); Vermander, Jeroen, 8433 Middelkerke (BE); Boydens, Joachim, 8210 Zedelgern (BE); Carpentier, Michael, 8490 Varsenare (BE)
(74) Representative: CNH Industrial IP Department

(56) References cited:
- EP-A1- 2 564 685
- EP-A1- 3 366 106
- EP-B1- 2 564 685
- WO-A1-2019/007877
- DE-A1- 102014 102 221
- US-A1- 2018 035 609

## Description

### Field of the Invention

The present invention is related to self-propelled forage harvesters (SPFHs) suitable for collecting grass or a similar crops from a field.

### State of the art.

Self-propelled forage harvesters are used to collect grass from a field, either by cutting the gras and collecting it directly or by gathering the grass after it has been cut and left on the field in the form of swaths. The harvester is fitted with a header to collect the grass stalks and move them to a centrally placed inlet at the front of the harvester, at which point the crops are taken into the body of the harvester by a feed roll assembly. From there, the crops are fed to a rotating cutter drum and possibly a set of additional processing rolls which chop up and process the stalks into smaller particles. A stream of these particles is ejected by an accelerator or blower through a curved spout that can be positioned to eject the stream into a receiving trailer towed by a tractor alongside or behind the forage harvester.

These same harvesters, equipped with a different header type, are also used for cutting and processing stalk-like crops like maize, but the present invention focuses on the collection of grass or equivalent crops.

One problem occurring when processing grass in the above-described way is that the spout may become blocked by a local build-up of crops which obstructs the ejection into the trailer. As the driver needs to pay attention to both the filling of the trailer and the steering of the harvester, it may happen that some time elapses before the driver becomes aware of the problem, enough for the blockage to cause the feeding mechanism of the harvester to become filled with crops, with potential mechanical damage as a consequence. At this point, a lengthy cleaning effort and possibly a repair operation is necessary which represents a considerable loss of time.

Patent publication document EP3366106 discloses an agricultural harvesting machine such as a forage harvester, with at least one agricultural working unit that performs agricultural work, and an adjusting unit for adjusting the parameters of the particular working unit, a conveyor channel for a crop stream generated in a harvesting process by harvesting a field of crop, and an NIR sensor unit containing an NIR sensor which is configured for detecting constituents and/or properties of the crop stream. The crop stream in the conveyor channel can be guided past the NIR sensor and possibly a camera, which may be mounted on the spout of the forage harvester. An on-line data processing unit controls the particular working unit, and generates control data on the basis of crop stream data which have been generated by the NIR sensor unit and correspond to the constituents and/or properties detected by the NIR sensor, and the adjusting unit carries out a parameter adjustment of the particular working unit on the basis of the control data.

### Summary of the invention

The invention is related to a self-propelled forage harvester as described in the appended claims.

### Brief description of the figures

Figure 1 is an image illustrating the discharge of processed crops from a self-propelled forage harvester into a trailer being towed behind the harvester.
Figure 2 shows the main functional components of a self-propelled forage harvester according to an embodiment of the invention.
Figure 3 illustrates a preferred sensor location on the spout of a forage harvester according to an embodiment of the invention.
Figures 4a and 4b illustrate an embodiment of a forage harvester according to the invention, wherein the spout is provided with a hatch door for removing blocked crops and with a sensor for detecting blockage of crops in the spout.
Figures 5a and 5b are simplified and schematic side views of the hatch door mechanism shown in Figures 3a and 3b.

### Detailed description of preferred embodiments of the invention

Preferred embodiments will now be described with reference to the drawings. The detailed description is not limiting the scope of the invention, which is defined only by the appended claims.

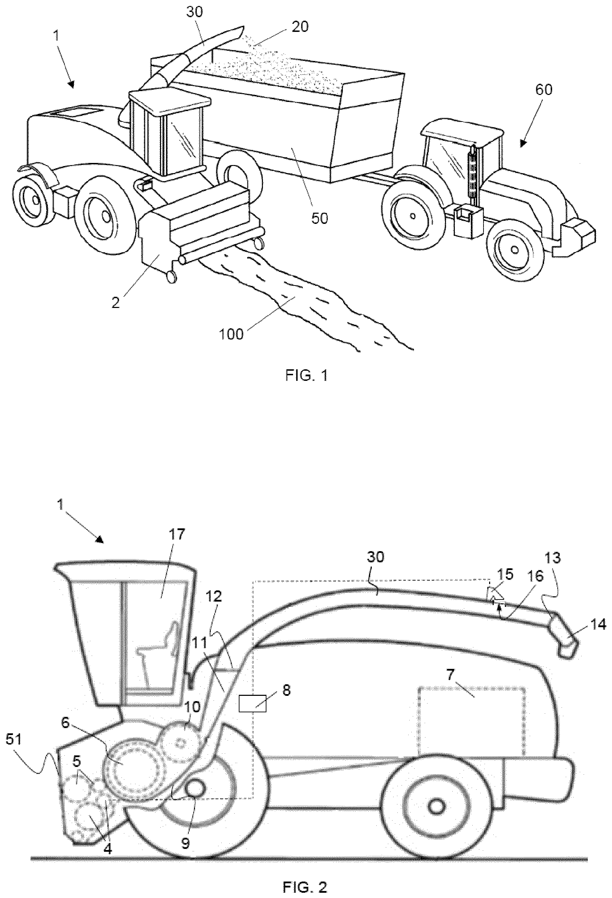

Figure 1 illustrates a self-propelled forage harvester 1 that is collecting and processing grass, or any other crop from a field through a header 2 mounted at the front of the harvester. Grass swathes 100 are lying along parallel trajectories on the field, having been cut previously, and the harvester driver follows these trajectories to collect and process the grass into finely chopped particles. A stream of such processed crops 20 is ejected from the spout 30 of the harvester and discharged into a trailer 50 towed by a tractor 60 that is driven alongside the harvester.

The active components of a forage harvester 1 according to an embodiment of the invention are illustrated in Figure 2. The header is not shown in the drawing. When attached to the harvester, the header, i.e. a grass pickup unit, collects the grass and delivers it to an inlet section 51 at the front of the harvester. Immediately behind this inlet section 51, a feed roll assembly is positioned, comprising a lower set of rotatable feed rolls 4 and an upper set of rotatable feed rolls 5, configured to move the received crops in the form of a mat of crops moving between the upper and lower feed rolls towards a cutter drum 6. The feed rolls are preferably equipped with springs (not shown) , in order to adapt the gap to changes in the thickness of the incoming stream of crops. The rotation of the feed rolls is driven actively by a power source not shown in Figure 2. This may be a hydraulic motor or the harvester's drive engine 7, coupled to the feed rolls through a driveline comprising a number of drive axles, gearboxes and one or more belt drives.

A feed roll control unit 8 is indicated symbolically in Figure 2. This may be any kind of control apparatus known in the art and comprising electronic control means and possibly hydraulic and/or mechanical control means for controlling the operation of the feed rolls 4,5, in terms of their rotational speed. In a harvester according to the invention, the feed roll control unit 8 is capable at least of stopping the rotation of the feed rolls on the basis of an incoming electronic command signal received by the control unit 8.

The mat of crops is fed by the feed rolls 4,5 to the rotating cutter drum 6 which is fitted with knives passing by a stationary shear bar (not shown) as the drum 6 rotates, thereby chopping the advancing crops into particles which are further transported between the cutter drum 6 and a concave plate 9, to thereby produce a flow of crops moving towards an accelerator 10, which may be a paddle accelerator or a blower. In the embodiment shown, no further processing rolls are present, but a set of such processing rolls may be provided between the cutter drum 6 and the accelerator 10. The accelerator 10 propels the flow into a tower duct 11. A rotatable spout 30 is mounted to be rotatable about an essentially vertical axis, while its inlet section 12 is coupled to the outlet of the tower duct 11, so that the flow of crops is propelled through the spout 30. The spout's outlet section 13 is provided with a deflector 14 whose angular position can be controlled to direct the discharged flow as it is ejected from the spout 30.

The spout 30 is basically a curved duct, usually having a rectangular cross-section as seen perpendicularly to the direction of the crop flow. According to the invention, a sensor 15 is mounted on the spout 30 for measuring the speed of the crop flow through the spout. A sensor having this functionality is known as such, and disclosed for example in patent publication document WO2019/007877. The sensor produces a signal representative of the crop speed. Figure 2 illustrates just one exemplary embodiment in terms of the location of the sensor 15 and the sensor type, and other locations and sensor types are possible. According to the embodiment shown, the sensor 15 is a radar sensor that uses a Doppler measurement technique for producing the signal. The radar sensor 15 measures the speed by a contactless measurement, i.e. the sensor is not in physical contact with the crop flow. Still according to the embodiment shown, the sensor 15 is mounted on the upper surface of the spout 30. A transparent window 16 is provided in said upper surface, to enable the contactless speed measurement by the radar sensor 15.

As illustrated conceptually in Figure 2, the sensor 15 is connected to an input port of the feed roll control unit 8, i.e. the feed roll control unit 8 receives the signal generated by the sensor 15. The feed roll control unit 8 is furthermore configured to generate a control signal that automatically stops the rotation of the feed rolls 4,5 when the speed of the crop flow drops below a pre-defined threshold that indicates that a blockage has occurred in the spout. This interruption of the feed roll rotation takes place without a manual intervention of the driver, and thereby avoids a build-up of crops upstream of the blockage position. According to a preferred embodiment, the moving parts of the header 2, as well as the cutter drum 6, possible processing drums and the accelerator 10 are not stopped when the feed rolls 4,5 stop as a consequence of the detected blockage.

Preferably, the harvester 1 itself is not automatically brought to a standstill when the feed rolls 4,5 stop. According to a preferred embodiment, the harvester is configured so that an alarm signal is generated in the driver's cabin 17, informing the driver of the fact that the feed rolls have stopped, so that the driver may bring the harvester to a standstill manually. According to a preferred embodiment, a signal is also transmitted to the cabin of the tractor 60 over a wireless communication channel between the harvester 1 and the tractor 60, said signal being configured to cause the sounding of an alarm in the tractor's cabin so that the tractor driver may equally stop his vehicle in time.

In order to avoid excessive build-up of crops upstream of the blockage position, the feed roll control unit 8 must be able to react quickly to the detection of the blockage. Preferably the feed rolls 4,5 need to arrive at zero speed within maximum 1/10 of a second. To this aim, the sensor 15 is preferably a sensor that is equipped with little or no internal filtering compared to existing sensors used for measuring the crop flow, as the internal filtering of the signal will increase the delay of the detection. In the control unit 8, filtering of the signal received from the sensor 15 is nevertheless required in order to ensure that spikes in the signal do not result in false detections.

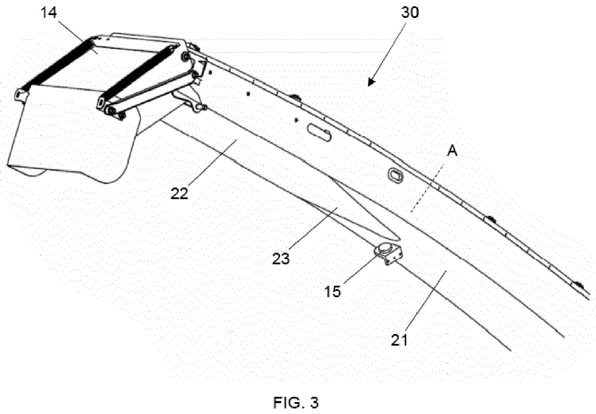

Figure 3 illustrates a more preferred position of the blockage sensor 15. According to this embodiment, the sensor is mounted on the underside of the spout 30. Further according to this embodiment and as is usually the case in existing forage harvesters, the spout 30 is not fully closed at its outlet section 13, but the bottom of the spout is open downstream from a position A. This 'partly open' spout is implemented to facilitate the deflection of the crop stream by the deflector 14 without causing a blockage at the deflector position itself. Figure 3 shows how the bottom of the spout 30 changes from a closed bottom 21 to an open bottom 22 via a V-shaped transition 23. According to the preferred embodiment, the blockage sensor 15 is mounted at the start of the open portion 23+22 of the spout's bottom (at the point of the 'V'), i.e. viewing the location at which the crop flow first becomes visible through the open bottom portion of the spout. The sensor may however be placed anywhere between the point of the V and the open end of the V. The advantage of this position is that this is the location where a blockage is most likely to occur in this type of spout, so that its detection can be achieved more quickly compared to other sensor locations. Also, the sensor location on the open underside of the spout makes it unnecessary to provide a window in the spout wall, when a contact-less sensor, such as the above-described radar sensor is used.

While Figure 3 illustrates a preferred sensor position, the invention is not limited to this position. The sensor may be placed at any location along the spout 30 where the speed of the crop flow can be measured. The sensor may be attached to the upper or lower wall, or to a sidewall of the spout 30. When a contact-less sensor is attached to a closed portion of any of these walls, a transparent window is required to provide a view to the sensor. However other types of crop flow speed sensors may be used instead of contact-less sensors. For example, an optical sensor may be used or two capacitive detectors placed at a distance from each other, wherein the speed of the flow is determined by comparing the delay between the two signals generated by the respective detectors. In the latter case, the pair of capacitive detectors represents an embodiment of one 'sensor' applicable according to the invention, and its position may be defined as the midpoint between the two capacitive detectors.

According to an embodiment, the blockage detection is operated in conjunction with a detection system configured to detect that the forage harvester is actually operative and harvesting crops. The blockage sensor 15 is then only active when the harvester is harvesting crops. When the harvester is not harvesting crops, for example during movement over headland or between subsequent swaths of grass on a field, blockage detection is disabled to avoid unnecessary stopping of the feed rolls 4, 5 due to an incorrect detection of a crop speed below the threshold, for example through particles which have made their way into the spout. Any currently known means for detecting actual harvesting may be used for this purpose.

According to another embodiment, several sensors are mounted at different positions along the spout 30, each sensor being coupled to the feed roll control unit 8, the latter being configured to stop the feed rolls 4,5 as soon as at least one of the sensors indicates a speed lower than the pre-defined threshold. In this way a blockage can be detected quickly and regardless of where it occurs along the trajectory of the crops through the spout 30.

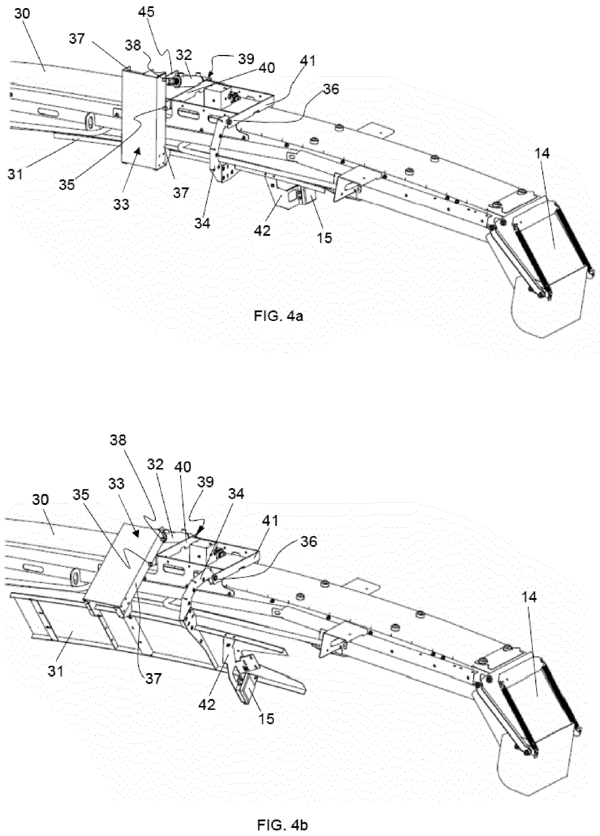

According to a preferred embodiment, a portion of the bottom of the spout is provided with a mechanism comprising at least one hatch door that can be opened after a blockage has occurred in order to remove the blocked crops by letting it drop to the ground or in the trailer through an opening created by opening the hatch door. One way of bringing this embodiment into practice is illustrated in Figures 4a and 4b. A portion of the bottom of the spout 30 immediately upstream of the position of the sensor 15 is now formed as a hatch door 31 that can be opened and closed by a variable length actuator 32, which may be an electric or hydraulic actuator. Figure 4a shows the hatch door 31 in the closed condition while Figure 4b shows the door in the open condition. The door 31 is fixed to a first and second pivotable bracket 33 and 34. These brackets are pivotably connected to the spout in two respective pivot points 35 and 36 which define a common pivot axis that is oriented essentially in the longitudinal direction of the spout, or to be more precise, in the longitudinal direction of the spout's section between the locations of the pivot points 35 and 36. While the pivot axis is straight, said longitudinal direction may be slightly curved, following the curvature of the spout. As seen in the drawings, this may be taken into account by making the hatch door 31 itself also slightly curved.

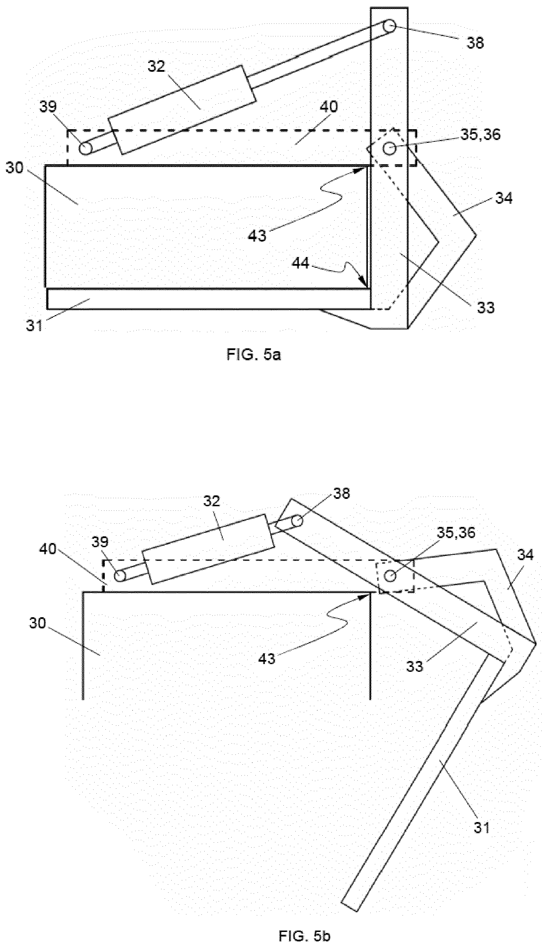

The pivot points 35 and 36 are provided at the outer end of upstanding plate elements 40, 41 and 45 fixed to the upper surface of the spout 30. The term 'pivot points' is used herein to indicate pivots as seen in a side view of the mechanism (see further in relation to Figures 5a and 5b). It is clear that in reality these pivot points are realized as local pivot axles.

In the embodiment shown, the pivot axis defined by pivot points 35 and 36 lies outside the rectangular cross-section of the spout 30, and proximal to an upper corner of said cross-section. The first pivotable bracket 33 is a rectangular plate-shaped element with upstanding sidewalls 37. This first bracket 33 is oriented essentially perpendicularly with respect to the longitudinal direction of the spout when the hatch door 31 is closed, as seen in Figure 4a. The pivot point 35 is situated centrally or slightly out of centre along the length of the rectangular bracket 33. At its lower end, the rectangular bracket 33 is fixed to the hatch door 31, while at its upper end, the rectangular bracket 33 is pivotably coupled at a third pivot point 38 to one end of the variable length actuator 32. The other end of this actuator 32 is pivotably coupled at a fourth pivot point 39 between upstanding walls 40 and 45 which are fixed to the upper surface of the spout.

The components and the operation of this mechanism are shown more schematically and in a side view in Figures 5a and 5b. When the actuator 32 is in the extended position (fig. 4a and 5a), the hatch door 31 is closed. When the actuator is retracted (fig. 4b and 5b), the rectangular bracket 33 pivots about pivot point 35, thereby opening the hatch door 31, while the latter is supported by both the rectangular bracket 33 and the second pivotable bracket 34, the latter rotating about pivot point 36, together with the first bracket 33 and the hatch door 31.

The position of the pivot points 35 and 36 in proximity to the upper corner 43 of the spout's cross section (see Fig. 5a) is particularly advantageous because this position causes the hatch door 31 to be fully removed from the opening in the underside of the spout, as seen in Figure 5b. This means that the opening is fully liberated, even if the brackets 33 and 34 are pivoted over less than 90°, thereby ensuring effective evacuation of blocked crops through the opening.

Alternatively, the hatch door could hinge around a pivot axis that lies in proximity to the lower corner 44 of the cross section, or that may coincide with said lower corner. In this case, pivoting the hatch door over less than 90° relative to the spout's undersurface may inhibit the evacuation of the blocked crops. The embodiment of the drawings is therefore a more preferable solution.

Having said this, the invention is not limited to any particular hatch door configuration. Any means by which a portion of the bottom of the spout may be opened in order to evacuate blocked crops falls under the definition of a hatch door mechanism in accordance with the invention. The door could be provided with a hinge axis that is transversally positioned with respect to the flow direction of the crops, or a hatch mechanism may be realized by providing two oppositely hinging doors, each one provided with its own actuator. Or the door could be a sliding door mechanism, wherein a movable plate is configured to slide sideways with respect to the spout or in the longitudinal direction of the spout.

When the hatch door 31 is operated through one or more actuators 32, the opening and closing of the hatch door is preferably operable by the driver of the harvester, by a suitable control in the driver's cabin. This allows the driver to manoeuvre the harvester to a suitable place or at least rotate the spout to a suitable position after a blockage has occurred, then open the hatch door 31 to evacuate the blockage, and then close the door again, before continuing the harvesting run. Evacuation of the blockage and re-starting the harvesting run can thereby be realized fast and efficiently. The invention however also includes a hatch door mechanism that is manually operable, requiring the driver to leave the cabin and manually open and re-close the hatch door.

The hatch door is preferably but not exclusively combined with the presence of the blockage sensor 15 described above. This combination allows both a quick detection of the blockage and an efficient removal thereof. As shown in the embodiment of Figures 4a and 4b, the sensor 15 may be attached to the hatch door 31 itself. For this purpose, the hatch door is then provided with a support bracket 42 onto which the sensor 15 is mounted.

According to a further embodiment, instead of a hatch mechanism, a portion of the bottom of the spout 30 can be provided with a crop expel mechanism (not shown in the figures). After a blockage has occurred and (a part of) the spout is full of crop, the operator can activate a mechanism to push the blocked crop downstream, out of the spout. A crop expel mechanism can take a lot of shapes. A crop expel mechanism can be in the form of a walking beam mechanism. Here the bottom of the spout 30 comprises guiding elements that are flush with the bottom when in a rest position but enter the crop stream when activated. During a reciprocal movement the guiding elements are entered in the crop stream when crop is expelled but are again flush with or below the bottom when the guiding elements return to the rest position. A further reciprocal crop expel mechanism may comprise tines, as in a bale eject system, where tines are pushed upwards and push crop to the spout's outlet section when activated. During the returning phase the tines are then rotated to lie on the bottom of the spout and glide under the crop. Various mechanisms can be devised to provide such reciprocal movement of guiding elements or tines.

According to a further embodiment, the SPFH can be equipped with a compressor that generates compressed air. The spout may further comprise an arrangement of nozzles supplied with compressed air oriented such that activation of the compressed air pushes the blocked crop to the exit of the spout. Different control strategies of supplying compressed air may be applied, ranging from a continuous supply through all nozzles to pulses of compressed air to selected nozzles.

## Claims

1. A self-propelled forage harvester (1) for cutting and/or gathering grass or similar crops from a field, the harvester comprising a feed roll assembly (4,5) for receiving crops collected by a header (2) mounted at the front of the harvester and for moving the received crops by active rotation of the feed rolls towards a cutter drum (6), the harvester further comprising an accelerator (10), a tower (11) for receiving the crop flow from the accelerator, and a curved spout (30) having an inlet section (12) and an outlet section (13), the inlet section being coupled to the tower (11) so as to receive the crop flow and guide it towards the outlet section from which the flow is then ejected via a deflector (14), **characterised in that** the harvester further comprises:
- at least one sensor (15) configured to detect whether the crop flow speed within the spout (30) is below a predefined threshold, said threshold indicating that a blockage of the crops is occurring in the spout (30),
- a control unit (8) coupled to the sensor (15) and to the feed roll assembly (4,5) and configured to automatically stop said active rotation of the feed rolls (4,5) when the crop flow speed is lower than the predefined threshold.

2. The harvester according to claim 1, wherein the spout (30) has a rectangular cross-section, and wherein a portion (22,23) of the bottom of the spout is open between a location (A) upstream of the outlet section (13) and the outlet section (13) itself, and wherein the sensor (15) is :
- a contactless sensor configured to measure the crop flow speed without physically contacting the crop flow,
- attached to the underside of the spout and configured to measure the crop flow speed at the start of said open portion (22,23) of the bottom of the spout.

3. The harvester according to claim 2, wherein the bottom of the spout (30) changes from a closed bottom (21) to an open bottom (22) through a V-shaped transition zone (23), and wherein the sensor (15) is attached to the underside of the spout so as to measure the crop flow speed at a location within the V-shaped transition zone (23).

4. The harvester according to any one of the preceding claims, comprising a plurality of said sensors arranged at different locations along the spout (30).

5. The harvester according to any one of the preceding claims, configured so that the cutter drum (6), the processing rolls, if present, and the accelerator (10), as well as any moving parts of the header (2) are not automatically stopped and wherein the harvester itself is not automatically brought to a standstill, when the rotation of the feed rolls (4,5) is stopped, following the detection of a blockage of crops in the spout (30).

6. The harvester according to any one of the preceding claims, configured so that a signal is transmitted from the harvester to a tractor (60) moving together with the harvester through a field during a harvesting run and towing a trailer (50) for collecting the crop flow issuing from the spout (30), said signal leading to the generation of an alarm signal in the tractor driver's cabin, when the rotation of the feed rolls (4,5) is stopped, following the detection of a blockage of crops in the spout (30).

7. The harvester according to any one of claims 1 to 6, wherein the spout (30) is provided with a hatch door mechanism comprising at least one hatch door (31) arranged on the underside of the spout (30), enabling the removal of blocked crops by opening the hatch door (31) and letting the blocked crops drop to the ground through an opening in the bottom of the spout created by opening the hatch door (31).

8. The harvester according to claim 7, wherein the hatch door mechanism comprises a pivotable hatch door (31) supported by and fixed to two pivotable brackets (33,34) arranged laterally with respect to the spout when the hatch door (31) is closed, and wherein the brackets are pivotable about a first and second pivot point (35,36) respectively, which define a pivot axis that is oriented essentially in the longitudinal direction of the spout.

9. The harvester according to claim 8, wherein the spout (30) has a rectangular cross-section, and wherein the pivot points (35,36) are located in close proximity to the upper corner (43) of said cross-section.

10. The harvester according to claim 9, wherein the hatch door mechanism further comprises a variable length actuator (32) and wherein at least one of said pivotable brackets (33,34) is a beam or plate-shaped element (33) oriented essentially perpendicularly with respect to the spout's longitudinal direction when the hatch door (31) is closed, and pivotably coupled to one end of the variable length actuator (32) at the upper end of said element (33), while supporting the hatch door (31) at its lower end and with the first pivot point (35) in a more or less central position between said lower and upper ends, and wherein the actuator (32) is pivotably coupled at its other end to the upper surface of the spout, so that the extension of the actuator (32) closes the hatch door (31) while the retraction of the actuator (32) opens the hatch door (31).

## Patentansprüche

1. Selbstfahrender Feldhäcksler (1) zum Schneiden und/oder Aufnehmen von Gras oder ähnlichem Erntegut von einem Feld, wobei der Häcksler eine Zuführwalzenanordnung (4, 5) zur Aufnahme von Erntegut, das von einem an der Front des Häckslers montierten Vorsatz (2) gesammelt wird, und zum Bewegen des aufgenommenen Ernteguts durch aktive Drehung der Zuführwalzen in Richtung einer Häckseltrommel (6) umfasst, wobei der Häcksler ferner einen Beschleuniger (10), einen Turm (11) zur Aufnahme des Erntegutstroms von dem Beschleuniger und eine gekrümmten Auswurfröhre (30) mit einem Einlassabschnitt (12) und einem Auslassabschnitt (13) umfasst, wobei der Einlassabschnitt an den Turm (11) gekoppelt ist, um den Erntegutstrom aufzunehmen und ihn in Richtung des Auslassabschnitts zu leiten, aus dem der Strom dann über einen Deflektor (14) ausgeworfen wird, **dadurch gekennzeichnet, dass** der Häcksler ferner umfasst:
- mindestens einen Sensor (15), der konfiguriert ist zu erfassen, ob die Erntegutstromgeschwindigkeit innerhalb der Auswurfröhre (30) unter einem vorgegebenen Schwellenwert liegt, wobei der Schwellenwert anzeigt, dass eine Verstopfung des Ernteguts in der Auswurfröhre (30) auftritt,
- eine Steuereinheit (8), gekoppelt an den Sensor (15) und an die Zuführwalzenanordnung (4,5) und konfiguriert, um die aktive Drehung der Zuführwalzen (4,5) automatisch zu stoppen, wenn die Erntegutstromgeschwindigkeit niedriger als der vorgegebene Schwellenwert ist.

2. Erntemaschine nach Anspruch 1, wobei die Auswurfröhre (30) einen rechteckigen Querschnitt aufweist und wobei ein Abschnitt (22,23) des Bodens der Auswurfröhre zwischen einer dem Auslassabschnitt (13) vorgelagerten Stelle (A) und dem Auslassabschnitt (13) selbst offen ist und wobei der Sensor (15) ist:
- ein berührungsloser Sensor, der konfiguriert ist, um die Erntegutstromgeschwindigkeit zu messen, ohne den Erntegutstrom effektiv zu berühren,
- an der Unterseite der Auswurfröhre angebracht und konfiguriert ist, um die Erntegutstromgeschwindigkeit am Beginn des offenen Abschnitts (22,23) des Bodens der Auswurfröhre zu messen.

3. Erntemaschine nach Anspruch 2, wobei der Boden der Auswurfröhre (30) durch eine V-förmige Übergangszone (23) von einem geschlossenen Boden (21) zu einem offenen Boden (22) übergeht und wobei der Sensor (15) an der Unterseite der Auswurfröhre angebracht ist, um die Erntegutstromgeschwindigkeit an einer Stelle innerhalb der V-förmigen Übergangszone (23) zu messen.

4. Erntemaschine nach einem der vorstehenden Ansprüche, umfassend eine Vielzahl der Sensoren, die an verschiedenen Stellen entlang der Auswurfröhre (30) angeordnet sind.

5. Erntemaschine nach einem der vorstehenden Ansprüche, derart konfiguriert, dass die Messertrommel (6), die Verarbeitungswalzen, falls vorhanden, und der Beschleuniger (10) sowie jegliche beweglichen Teile des Vorsatzes (2) nicht automatisch angehalten werden und wobei die Erntemaschine selbst nicht automatisch zum Stillstand gebracht wird, wenn die Drehung der Zuführwalzen (4, 5) nach der Erkennung einer Verstopfung von Erntegut in der Auswurfröhre (30) gestoppt wird.

6. Erntemaschine nach einem der vorstehenden Ansprüche, derart konfiguriert, dass ein Signal von der Erntemaschine an einen Traktor (60) übertragen wird, der sich während einer Erntefahrt zusammen mit der Erntemaschine über ein Feld bewegt und einen Anhänger (50) zum Sammeln des aus der Auswurfröhre (30) austretenden Erntegutstroms zieht, wobei das Signal zur Erzeugung eines Alarmsignals in der Fahrerkabine des Traktors führt, wenn die Drehung der Zuführwalzen (4, 5) im Anschluss an die Erkennung einer Verstopfung von Erntegut in der Auswurfröhre (30) gestoppt wird.

7. Erntemaschine nach einem der Ansprüche 1 bis 6, wobei die Auswurfröhre (30) mit einem Lukenklappenmechanismus versehen ist, der mindestens eine an der Unterseite der Auswurfröhre (30) angeordnete Lukenklappe (31) umfasst, was die Entfernung von blockiertem Erntegut durch Öffnen der Lukenklappe (31) und Fallenlassen des blockierten Ernteguts auf den Boden durch eine Öffnung im Boden der Auswurfröhre, die durch das Öffnen der Lukenklappe (31) erzeugt wird, ermöglicht.

8. Erntemaschine nach Anspruch 7, wobei der Lukenklappenmechanismus eine schwenkbare Lukenklappe (31) umfasst, die von zwei schwenkbaren Halterungen (33, 34) getragen und an diesen befestigt ist, die seitlich in Bezug auf die Auswurfröhre angeordnet sind, wenn die Lukenklappe (31) geschlossen ist, und wobei die Halterungen jeweils um einen ersten und zweiten Schwenkpunkt (35, 36) schwenkbar sind, die eine Schwenkachse definieren, die im Wesentlichen in der Längsrichtung der Auswurfröhre ausgerichtet ist.

9. Erntemaschine nach Anspruch 8, wobei die Auswurfröhre (30) einen rechteckigen Querschnitt aufweist und wobei die Schwenkpunkte (35, 36) nahe der oberen Ecke (43) des Querschnitts angeordnet sind.

10. Erntemaschine nach Anspruch 9, wobei der Lukenklappenmechanismus ferner einen Aktuator (32) mit variabler Länge umfasst und wobei mindestens eine der schwenkbaren Halterungen (33, 34) ein balken- oder plattenförmiges Element (33) ist, das im Wesentlichen senkrecht in Bezug auf die Längsrichtung der Tülle ausgerichtet ist, wenn die Lukenklappe (31) geschlossen ist, und am oberen Ende des Elements (33) schwenkbar an ein Ende des Aktuators (32) mit variabler Länge gekoppelt ist, während es die Lukenklappe (31) an seinem unteren Ende und mit dem ersten Schwenkpunkt (35) in einer mehr oder weniger zentralen Position zwischen dem unteren und oberen Ende stützt, und wobei der Aktuator (32) an seinem anderen Ende schwenkbar an die obere Fläche der Auswurfröhre gekoppelt ist, sodass das Ausfahren des Aktuators (32) die Lukenklappe (31) schließt, während das Einfahren des Aktuators (32) die Lukenklappe (31) öffnet.

## Revendications

1. Ensileuse automotrice (1) destinée à couper et/ou à ramasser du fourrage ou des cultures similaires dans un champ, l'ensileuse comprenant un ensemble de rouleaux d'alimentation (4, 5) destiné à recevoir des cultures rassemblées par une tête de coupe (2) montée à l'avant de l'ensileuse et à déplacer les cultures reçues par rotation active des rouleaux d'alimentation vers un tambour de coupe (6), l'ensileuse comprenant en outre un accélérateur (10), une tour (11) destinée à recevoir le flux de récolte provenant de l'accélérateur, et un bec (30) incurvé ayant une section d'entrée (12) et une section de sortie (13), la section d'entrée étant accouplée à la tour (11) de manière à recevoir le flux de récolte et à le guider vers la section de sortie d'où le flux est ensuite éjecté par l'intermédiaire d'un déflecteur (14), **caractérisé en ce que** l'ensileuse comprend en outre :
- au moins un capteur (15) configuré pour détecter si la vitesse de flux de récolte à l'intérieur du bec (30) est inférieure à un seuil prédéfini, ledit seuil indiquant qu'un blocage des cultures se produit dans le bec (30),
- une unité de commande (8) couplée au capteur (15) et à l'ensemble de rouleaux d'alimentation (4, 5) et configurée pour arrêter automatiquement ladite rotation active des rouleaux d'alimentation (4, 5) lorsque la vitesse de flux de récolte est inférieure au seuil prédéfini.

2. Ensileuse selon la revendication 1, dans laquelle le bec (30) a une coupe transversale rectangulaire, et dans laquelle une partie (22, 23) du fond du bec est ouverte entre un emplacement (A) en amont de la section de sortie (13) et la section de sortie (13) elle-même, et dans laquelle le capteur (15) est :
- un capteur sans contact configuré pour mesurer la vitesse de flux de récolte sans contact physique avec le flux de récolte,
- fixé à la face inférieure du bec et configuré pour mesurer la vitesse de flux de récolte au début de ladite partie ouverte (22, 23) du fond du bec.

3. Ensileuse selon la revendication 2, dans laquelle le fond du bec (30) passe d'un fond fermé (21) à un fond ouvert (22) à travers une zone de transition (23) en forme de V, et dans laquelle le capteur (15) est fixé à la face inférieure du bec afin de mesurer la vitesse de flux de récolte à un emplacement à l'intérieur de la zone de transition (23) en forme de V.

4. Ensileuse selon l'une quelconque des revendications précédentes, comprenant une pluralité desdits capteurs agencés à différents emplacements le long du bec (30).

5. Ensileuse selon l'une quelconque des revendications précédentes, configurée de sorte que le tambour de coupe (6), les rouleaux de traitement, s'ils sont présents, et l'accélérateur (10), ainsi que toutes les pièces mobiles de la tête de coupe (2) ne sont pas automatiquement arrêtés, et dans laquelle l'ensileuse elle-même n'est pas automatiquement arrêtée, lorsque la rotation des rouleaux d'alimentation (4, 5) est arrêtée, suite à la détection d'un blocage de cultures dans le bec (30).

6. Ensileuse selon l'une quelconque des revendications précédentes, configurée de sorte qu'un signal est transmis de l'ensileuse à un tracteur (60) se déplaçant conjointement avec l'ensileuse à travers un champ pendant un cycle de récolte et tractant une remorque (50) pour rassembler le flux de récolte sortant du bec (30), ledit signal entraînant la génération d'un signal d'alarme dans la cabine du conducteur de tracteur, lorsque la rotation des rouleaux d'alimentation (4, 5) est arrêtée, suite à la détection d'un blocage de cultures dans le bec (30).

7. Ensileuse selon l'une quelconque des revendications 1 à 6, dans laquelle le bec (30) est pourvu d'un mécanisme de trappe comprenant au moins une trappe (31) agencée sur la face inférieure du bec (30), permettant l'enlèvement de cultures bloquées en ouvrant la trappe (31) et en laissant tomber les cultures bloquées au sol par une ouverture dans le fond du bec, créée par l'ouverture de la trappe (31).

8. Ensileuse selon la revendication 7, dans laquelle le mécanisme de trappe comprend une trappe pivotante (31) supportée par et fixée à deux supports pivotants (33, 34) agencés latéralement par rapport au bec lorsque la trappe (31) est fermée, et dans laquelle les supports peuvent pivoter autour d'un premier et d'un second point de pivot (35, 36) respectivement, lesquels définissent un axe de pivotement qui est orienté essentiellement dans la direction longitudinale du bec.

9. Ensileuse selon la revendication 8, dans laquelle le bec (30) a une section transversale rectangulaire, et dans laquelle les points de pivot (35, 36) sont situés en étroite proximité avec le coin supérieur (43) de ladite section transversale.

10. Ensileuse selon la revendication 9, dans laquelle le mécanisme de trappe comprend en outre un actionneur (32) de longueur variable et dans laquelle au moins l'un desdits supports pivotants (33, 34) est un élément (33) en forme de barre ou de plaque, orienté essentiellement perpendiculairement par rapport à la direction longitudinale du bec lorsque la trappe (31) est fermée, et accouplé de manière pivotante à une extrémité de l'actionneur (32) de longueur variable au niveau de l'extrémité supérieure dudit élément (33), tout en supportant la trappe (31) au niveau de son extrémité inférieure et avec le premier point de pivot (35) dans une position plus ou moins centrale entre lesdites extrémités inférieure et supérieure, et dans laquelle l'actionneur (32) est accouplé de manière pivotante au niveau de son autre extrémité à la surface supérieure du bec, de sorte que l'extension de l'actionneur (32) ferme la trappe (31) tandis que la rétraction de l'actionneur (32) ouvre la trappe (31).
